# EUROPEAN PATENT APPLICATION

(11) **EP 3 451 646 A1**
(43) Date of publication of application: **06.03.2019**
(21) Application number: 17789894.7
(22) Date of filing: 26.04.2017
(51) Int. Cl.: H04N 1/00

(54) **METHOD FOR TRANSMITTING AND RECEIVING FAX BY USING APPLICATION, AND VIDEO IMAGE FORMING APPARATUS FOR PERFORMING SAME**

(30) Priority: 29.04.2016 KR 20160053149
(71) Applicant: HP Printing Korea Co., Ltd., Gyeonggi-do 16677 (KR)
(72) Inventor: KIM, Hyeong-ju, Suwon-si Gyeonggi-do 16571 (KR); KANG, Hyung-jong, Seoul 05823 (KR); YOON, Chang-wook, Hwaseong-si Gyeonggi-do 18477 (KR); CHUNG, Yong-goo, Seoul 06270 (KR); HONG, Jung-mo, Suwon-si Gyeonggi-do 16543 (KR)
(74) Representative: Walaski, Jan Filip
(86) International application number: PCT/KR2017/004396
(87) International publication number: WO 2017/188710

(57) **Abstract**

Provided is an image forming apparatus including: a communicator configured to perform communication with an external device; a fax unit configured to receive a fax document through a public switched telephone network; a memory in which an application for routing the received fax document is installed; and a controller configured to execute the application installed in the memory, wherein the controller is further configured to select, based on an attribute of the fax document, a device to which the fax document is to be transmitted, and to transmit the fax document to the selected device via the communicator.

## Description

### TECHNICAL FIELD

The present disclosure relates to a method of transmitting and receiving a fax using an application installed in an image forming apparatus, and the image forming apparatus for performing the method.

### BACKGROUND ART

In order to transmit and receive a fax in a general environment, an option kit for supporting functions of a fax has to be mounted in a device, and as many wired phone lines as there are devices are required. Thus, in order to mount the option kit and for the maintenance of the wired phone lines, fixed costs are necessary.

### DESCRIPTION OF DISCLOSURE

### TECHNICAL PROBLEM

Provided is a method of transmitting and receiving a fax by installing an application in a device that does not support fax functions itself, and an image forming apparatus for performing the method.

### SOLUTION TO PROBLEM

According to an aspect of the present disclosure, an image forming apparatus includes: a communicator configured to perform communication with an external device; a fax unit configured to receive a fax document through a public switched telephone network; a memory in which an application for routing the received fax document is installed; and a controller configured to execute the application installed in the memory, wherein the controller is further configured to select, based on an attribute of the fax document, a device to which the fax document is to be transmitted, and to transmit the fax document to the selected device via the communicator.

### ADVANTAGEOUS EFFECTS OF DISCLOSURE

According to examples described in the present specification, a fax may be transmitted and received by simply installing an application in a device, without the need to mount an option kit for supporting fax functions in the device or the need to provide a wired phone line for each of devices. Thus, user convenience may be improved and costs may be reduced.

### BRIEF DESCRIPTION OF DRAWINGS

FIG. 1 is a block diagram of an image forming apparatus according to an example.
FIG. 2 is a view illustrating a structure of a system configured to execute a method of transmitting and receiving a fax, according to an example.
FIG. 3 is a view illustrating a process of routing a fax based on caller identification (ID), according to an example.
FIG. 4 is a view illustrating a user interface (UI) screen for setting a forward event in a remote fax application, according to an example.
FIG. 5 is a flowchart of a method of routing a fax based on caller ID, according to an example.
FIG. 6 is a view illustrating a process of routing a fax based on a form type of a fax document, according to an example.
FIG. 7 is a flowchart of a method of routing a fax based on a form type of a fax document, according to an example.
FIG. 8 is a flowchart of a method of routing a fax based on caller ID and a form type of a fax document, according to an example.
FIG. 9 is a view illustrating a process of routing a fax to a cloud print server, according to an example.
FIG. 10 is a flowchart of a method of routing a fax to a cloud print server, according to an example.
FIG. 11 is a view illustrating a process of storing a fax document in a storage folder of a main device, according to an example.
FIG. 12 is a flowchart of a method of storing a fax document in a storage folder of a main device, according to an example.
FIG. 13 is a view illustrating a process of routing a fax based on a tag cover, according to an example.
FIG. 14 is a flowchart of a method of routing a fax based on a tag cover, according to an example.
FIG. 15 is a view illustrating a process of transmitting and receiving a fax by selecting a multi-function printer (MFP) as a main device, according to an example.
FIG. 16 is a view illustrating a process of transmitting and receiving a fax by selecting a fax server as a main device, according to an example.
FIG. 17 is a flowchart of a method of transmitting and receiving a fax by selecting a main device, according to an example.
FIG. 18 is a view illustrating a UI screen for setting a main device in a remote fax application, according to an example.

### BEST MODE

An image forming apparatus includes: a communicator configured to perform communication with an external device; a fax unit configured to receive a fax document through a public switched telephone network; a memory in which an application for routing the received fax document is installed; and a controller configured to execute the application installed in the memory, wherein the controller is further configured to select a device, to which the fax document is to be transmitted, based on an attribute of the fax document, and to transmit the fax document to the selected device via the communicator.

An image forming apparatus includes: an input and output unit configured to display a user interface (UI) screen and to receive an input from a user; a communicator configured to perform communication with an external device; a memory in which an application for transmitting a fax document is installed; and a controller configured to execute the application installed in the memory, wherein when the controller receives a request of transmitting fax via the input and output unit, the controller is further configured to transmit a fax number and a fax document included in the request of transmitting the fax to a device pre-designated by the application.

A method of transmitting fax using an application includes: receiving a fax document via a public switched telephone network; determining a destination of the fax document based on an attribute of the fax document; and transmitting the fax document to the determined destination.

A method of transmitting fax using an application includes: receiving a request of transmitting fax from a user; identifying a device pre-designated by the application; and transmitting a fax number and a fax document included in the request of transmitting the fax to the device.

### MODE OF DISCLOSURE

Hereinafter, various examples will be described in detail with reference to the drawings. The examples described hereinafter may be variously modified and executed. Aspects that are widely known to one of ordinary skill in the art will not be described in detail to clearly describe the examples.

Throughout the specification, it will be understood that when an element is referred to as being "connected" to another element, it may be "directly connected" to the other element or "electrically connected" to the other element with intervening elements therebetween. It will be further understood that when a part "includes" or "comprises" an element, unless otherwise defined, the part may further include other elements, not excluding the other elements.

In this specification, an "image forming job" may denote various operations (e.g., printing, scanning, or faxing) associated with an image, such as forming of an image, or generating/storing/transmitting of an image file. Also, a "job" may denote not only the "image forming job," but also series of processes required to perform the image forming job.

Also, an "image forming apparatus" may denote all apparatuses capable of performing the image forming job, such as a printer, a scanner, a fax machine, a multi-function printer (MFP), or a display apparatus.

In addition, "hard copying" may denote an operation of printing an image on a printing medium, such as paper, etc., and "soft copying" may denote an operation of outputting an image on a display apparatus, such as a television (TV) or a monitor.

Also, "content" may denote all types of data, which are objects of the image forming job, such as a picture, an image, or a document file.

Also, "print data" may denote data converted into a format printable in a printer.

Also, a "scan file" may denote a file generated by scanning an image via a scanner.

Also, a "fax document" may denote a document file transmitted and received via a fax function.

Also, a "user" may denote a person performing operations in relation to the image forming job, by using the image forming apparatus or devices connected to the image forming apparatus in wires or wirelessly. Also, a "manager" may denote a person having the authority to access all functions and systems of the image forming apparatus. The "manager" and the "user" may be the same person.

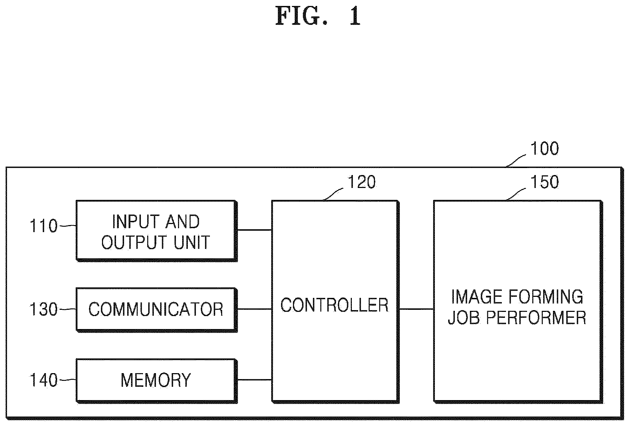

FIG. 1 is a block diagram of a structure of an image forming apparatus 100 according to an example. Referring to FIG. 1, the image forming apparatus 100 according to an example may include an input and output unit 110, a controller 120, a communicator 130, a memory 140, and an image forming job performer 150. Also, although not shown, the image forming apparatus 100 may further include a power unit configured to supply power to each of the components thereof.

The input and output unit 110 may include an input unit configured to receive an input for performing an image forming job, etc., from a user, and an output unit configured to display information, such as a result of performing the image forming job, a state of the image forming apparatus 100, etc. For example, the input and output unit 110 may include an operation panel for receiving a user input, a display panel for displaying a screen, etc.

In detail, the input unit may include various types of devices capable of receiving a user input, such as a keyboard, a physical button, a touch screen, a camera, a microphone, etc. Also, the output unit may include, for example, a display panel, a speaker, etc. However, the input and output unit 110 is not limited thereto, and may include various devices configured to support input and output operations.

The controller 120 may control general operations of the image forming apparatus 100 and may include a processor, such as a central processing unit (CPU). The controller 120 may control other components included in the image forming apparatus 100 to perform operations corresponding to user inputs received via the input and output unit 110.

For example, the controller 120 may execute a program stored in the memory 140, read a file stored in the memory 140, or store a new file in the memory 140.

The communicator 130 may perform wired or wireless communication with another device or a network. To this end, the communicator 130 may include a communication module supporting at least one of various wired or wireless communication methods. For example, the communication module may be in the form of a chip set or may include a sticker/bar code (e.g., a sticker including a near-field communication (NFC) tag) including information required for communication.

The wireless communication may include, for example, at least one of wireless fidelity (Wi-Fi), Wi-Fi direct, Bluetooth, ultra wide band (UWB), and NFC. The wired communication may include, for example, at least one of universal serial bus (USB) and a high definition multimedia interface (HDMI).

The communicator 130 may be connected to an external device located outside the image forming apparatus 100 and may transmit and receive signals or data to and from the external device.

Programs, such as applications, and various types of data, such as files, etc., may be installed and stored in the memory 140. The controller 120 may access the data stored in the memory 140 and use the data, or may store new data in the memory 140. Also, the controller 120 may execute the program installed in the memory 140. Also, the controller 120 may install an application received from the outside via the communicator 130, in the memory 140.

The image forming job performer 150 may perform at least one image forming job, such as printing, scanning, faxing, etc.

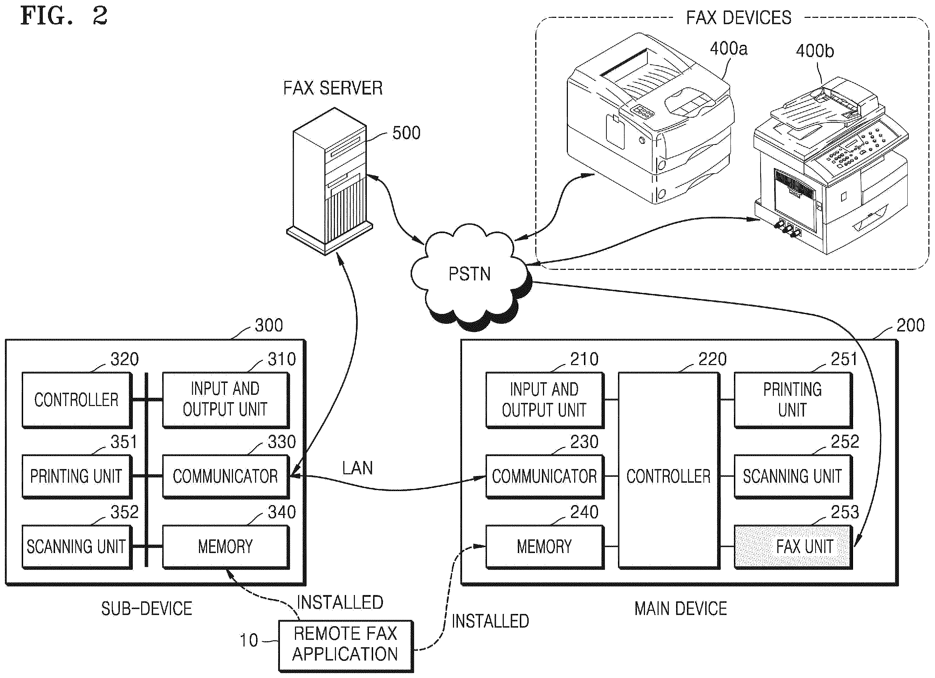

FIG. 2 is a view illustrating a structure of a system for executing a method of transmitting and receiving fax, according to an example.

Referring to FIG. 2, in order to execute the method of transmitting and receiving fax, according to an example, two image forming apparatuses 200 and 300 may be connected to each other via a local area network (LAN), wherein one image forming apparatus 200 may operate as a main device, and the other image forming apparatus 300 may operate as a sub-device 300. Operations of components included in the main device 200 and the sub-device 300 are the same as the operations of the components included in the image forming apparatus 100, described above with reference to FIG. 1.

According to examples described in this specification, while the main device 200 may include a printing unit 251, a scanning unit 252, and a fax unit 253, the sub-device 300 may include only a printing unit 351 and a scanning unit 352 and may not include a fax unit. Thus, the sub-device 300 may not support fax functions for itself, and may use fax functions of the main device 200 connected to the sub-device 300. In detail, the fax unit 253 of the main device 200 may be connected to fax devices 400a and 400b through a public switched telephone network (PSTN), and may transmit a fax document received from the sub-device 300 to the fax devices 400a and 400b, or on the contrary, may transmit a fax document received from the fax devices 400a and 400b to the sub-device 300.

To this end, an application, referred to as a remote fax application, may be installed in each of the memories 240 and 340 of the main device 200 and the sub-device 300. A detailed operation of the remote fax application will be described in detail below.

Meanwhile, the sub-device 300 may transmit and receive a fax document by using a fax server 500, which is an external server supporting fax functions.

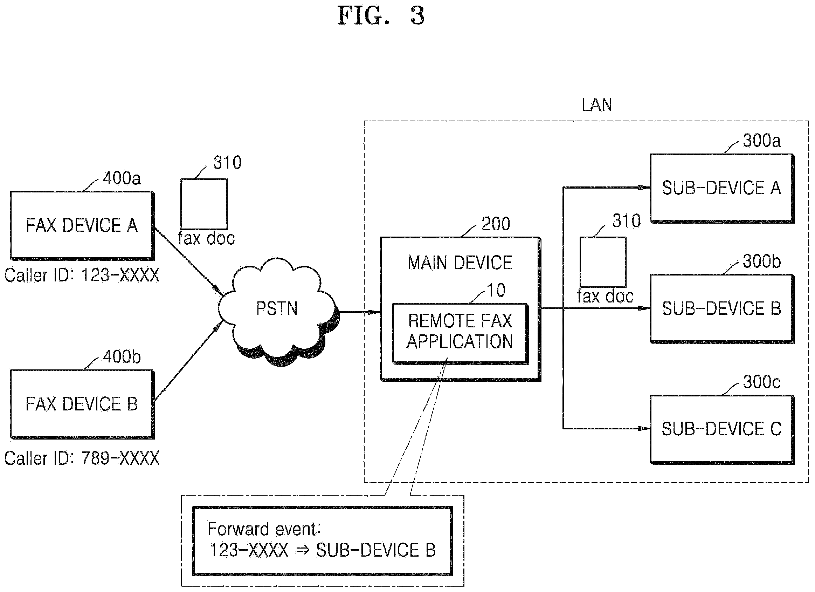

First, examples in which fax is received will be described with reference to FIGS. 3 through 14. According to necessity, FIG. 2 will be referred to together with FIGS. 3 through 14.

FIG. 3 is a view illustrating a process of routing a fax document based on caller identification (ID), according to an example. The caller ID denotes a caller number of a fax device transmitting fax.

Referring to FIG. 3, the main device 200 may be connected to a fax device A 400a and a fax device B 400b via a PSTN. A remote fax application 10 installed in the main device 200 may route a fax document received from the fax devices A and B 400a and 400b to sub-devices A, B, and C 300a, 300b, and 300c based on the caller number.

For the routing of the fax document based on the caller number, a forward event may be pre-registered in the remote fax application 10. Referring to FIG. 3, the forward event may be registered such that a caller number, 123-XXXX, matches the sub-device B 300b. According to the registered forward event, when the caller number of the fax document is 123-XXXX, the fax document may be transmitted to the sub-device B 300b. Thus, when the fax device A 400a transmits the fax document 310 to the main device 200 via the PSTN, the remote fax application 10 may identify that the caller number of the fax document 310 is 123-XXXX, and may transmit the fax document 310 to the sub-device B 300b.

FIG. 3 illustrates the example in which the fax document 310 is routed based on the caller number. However, the fax document may be routed based on fax ID rather than the caller number. Here, the fax ID may denote ID including a number or a letter directly input by a user to identify a fax device. Thus, the forward event whereby the fax ID matches the sub-devices may be registered in the remote fax application 10.

Meanwhile, the remote fax application 10 may identify the sub-devices A, B, and C 300a, 300b, and 300c via internet protocol (IP) addresses or host names, and this aspect is applied to examples hereinafter.

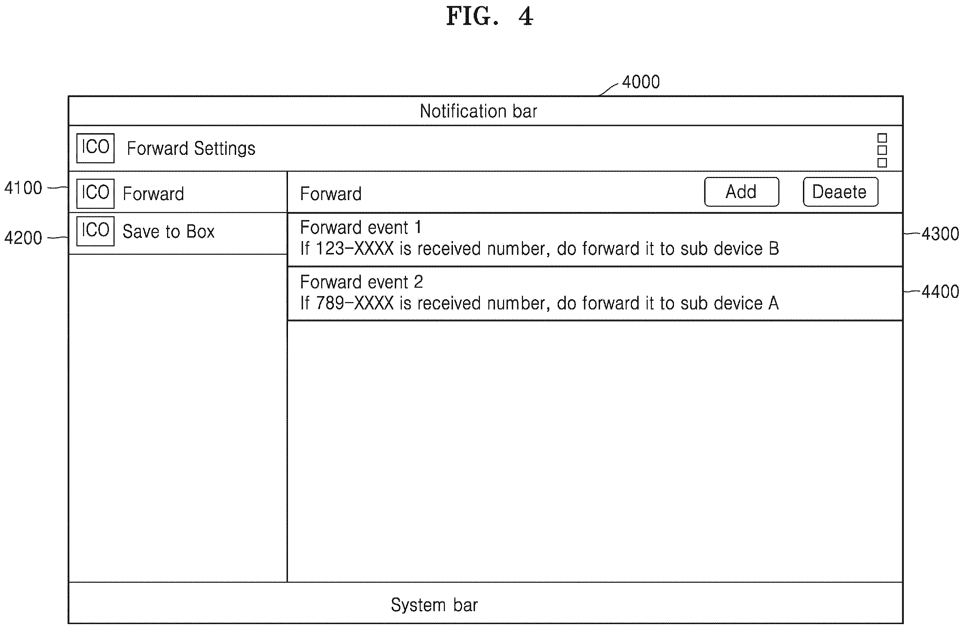

FIG. 4 is a view illustrating a user interface (UI) screen 4000 for setting a forward event in a remote fax application, according to an example.

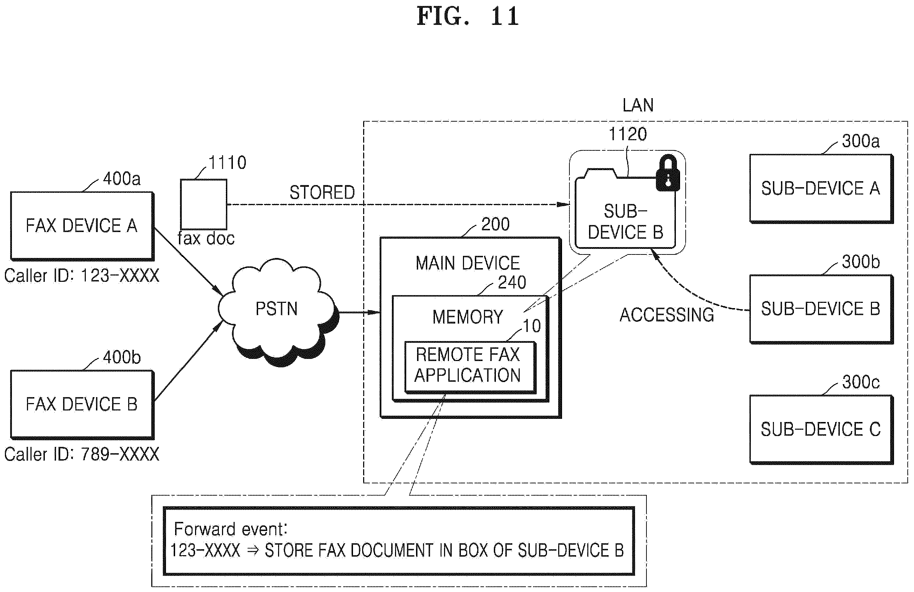

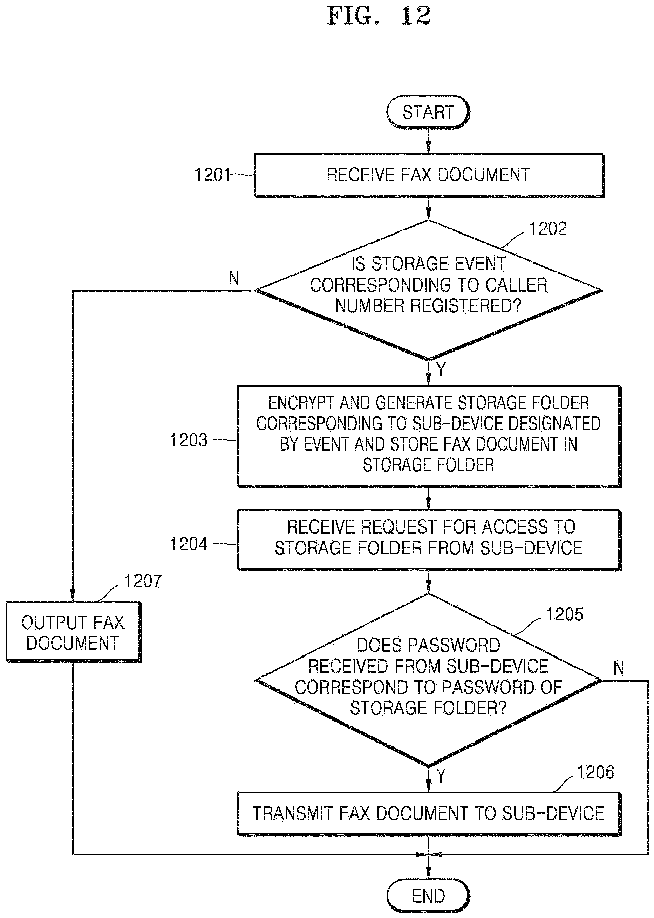

When the remote fax application installed in a main device is executed and enters into an operation of setting the forward event, the UI screen 4000 of FIG. 4 may be displayed on a display of the main device. A user may select any one of setting of a forward event 4100 and setting of a save to box event 4200 on the UI screen 4000. FIG. 4 illustrates that the setting of the forward event 4100 is selected so that a list of forward events 4300 and 4400 that are registered is displayed. The user may register a new forward event or delete a registered forward event. Meanwhile, aspects regarding the save to box event will be described in detail below with reference to FIGS. 11 and 12.

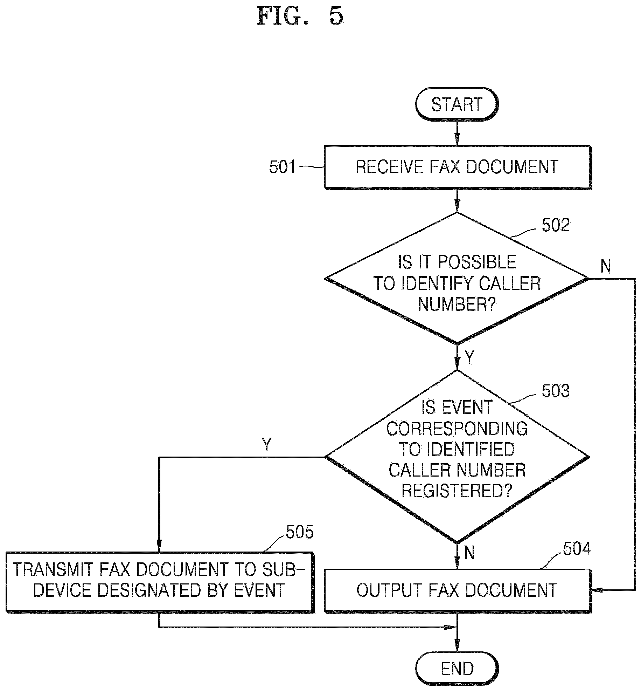

FIG. 5 is a flowchart of a method of routing fax based on caller ID, according to an example.

Referring to FIG. 5, a main device may receive a fax document from a fax device via a PSTN in operation S501. The main device may determine whether it is possible to identify a caller number of the received fax document. When it is not possible to identify the caller number, the method may proceed to operation S504, and the main device may output the received fax document. However, when it is possible to identify the caller number, the method may proceed to operation S503, and the main device may determine whether or not a forward event corresponding to the identified caller number is registered. When the forward event corresponding to the identified caller number is not registered, the method may proceed to operation S504, and the main device may output the fax document. However, when the forward event corresponding to the caller number is registered, the method may proceed to operation S505, and the main device may transmit the fax document to a sub-device designated by the forward event.

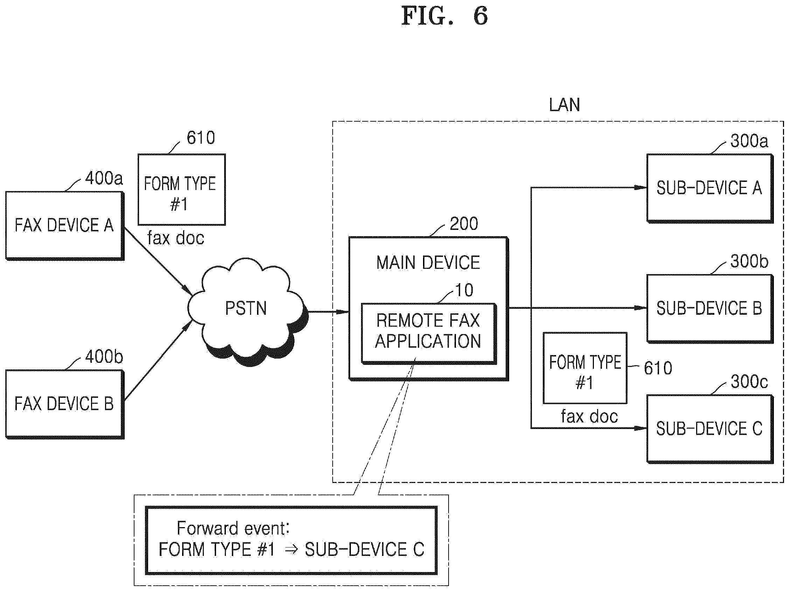

FIG. 6 is a view illustrating a process of routing fax based on a form type of a fax document, according to an example.

Referring to FIG. 6, the fax device A 400a may transmit a fax document 610 having a form type #1 to the main device 200 via a PSTN. The remote fax application 10 installed in the main device 200 may route fax documents received from the fax devices 400a and 400b to the sub-devices A, B, and C 300a, 300b, and 300c based on form types of the fax documents.

When the remote fax application 10 receives the fax document 610, the remote fax application 10 may recognize the form type of the fax document 610 by performing optical character recognition (OCR) and perform form matching to determine whether or not the recognized form type corresponds to a pre-stored form type. When the form type of the fax document 610 corresponds to the form type #1, based on a result of performing the form matching, the remote fax application 10 may determine whether or not a forward event corresponding to the form type #1 is registered. Referring to FIG. 6, the forward event is registered such that the form type #1 matches the sub-device C 300c. According to the registered forward event, when the form type of the fax document is the form type #1, the fax document may be transmitted to the sub-device C 300c. Thus, when the fax device A 400a transmits the fax document 610 to the main device 200 via the PSTN, the remote fax application 10 may identify that the form type of the fax document 610 is the form type #1, and may transmit the fax document 610 to the sub-device C 300c.

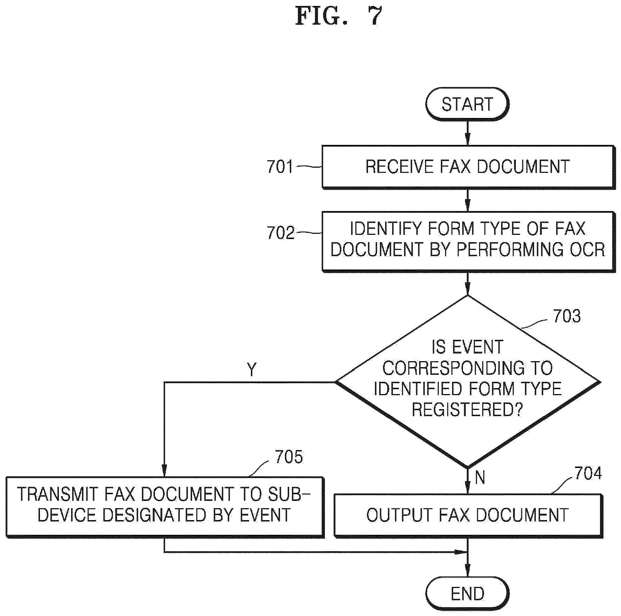

FIG. 7 is a flowchart of a method of routing fax based on a form type of a fax document, according to an example. Operations of FIG. 7 may be performed by the controller 220 of the main device 200 of FIG. 2 by executing the remote fax application 10 installed in the memory 240.

Referring to FIG. 7, the main device 200 may receive a fax document from a fax device via a PSTN, in operation S701. The main device may perform OCR on the received fax document to identify the form type of the fax document, in operation S702. The main device may determine whether a forward event corresponding to the identified form type is registered, in operation S703. When the forward event corresponding to the form type is not registered, the method may proceed to operation S704, and the main device may output the fax document. However, when the forward event corresponding to the form type is registered, the method may proceed to operation S705, and the main device may transmit the fax document to the sub-device designated by the forward event.

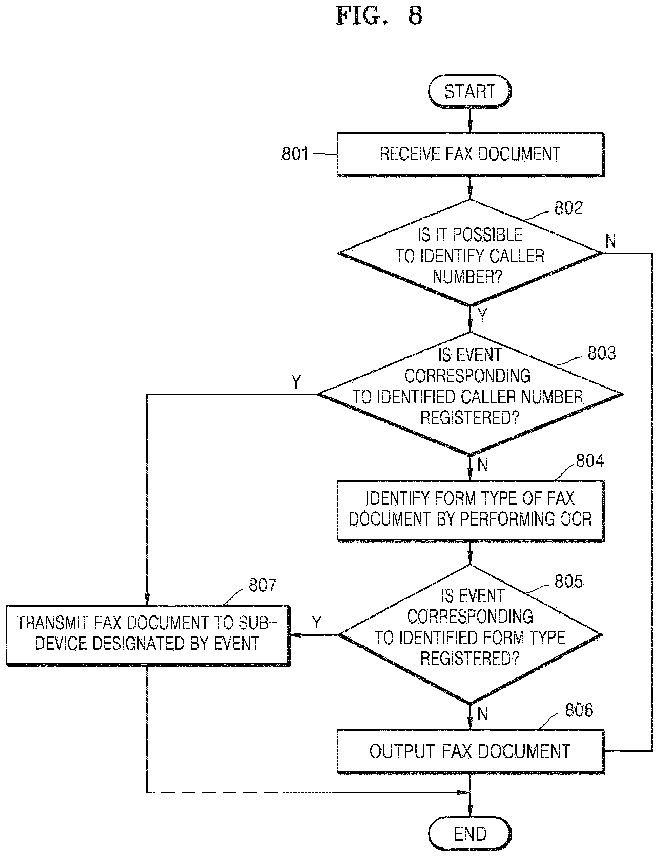

Meanwhile, both of the caller ID and the form type of the fax document may be taken into account for routing the fax. FIG. 8 is a flowchart of a method of routing fax based on the caller ID and the form type of a fax document, according to an example.

The flowchart of FIG. 8 is generated by combining the operations of FIGS. 5 and 7, and thus, detailed descriptions of the operations of FIG. 8 will be omitted.

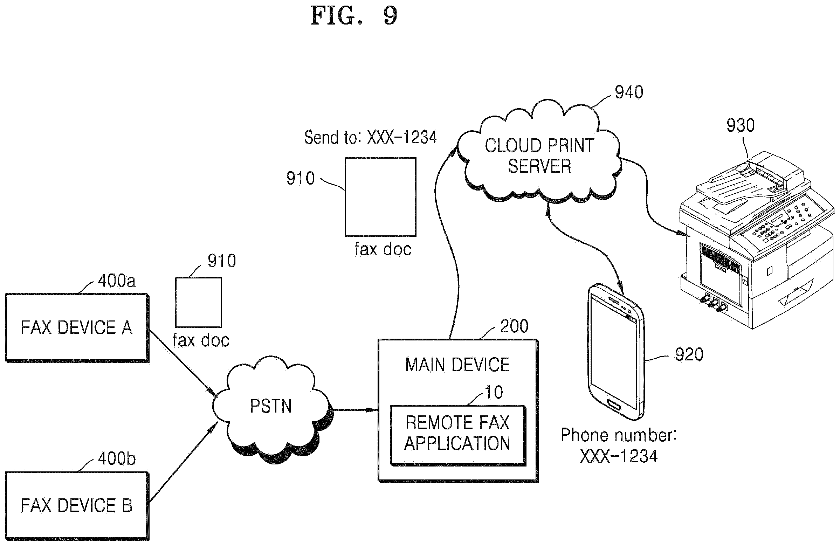

FIG. 9 is a view illustrating a process of routing fax to a cloud print server 940, according to an example.

Referring to FIG. 9, the fax device 400a may transmit a fax document 910 to the main device 200, via a PSTN. The remote fax application 10 installed in the main device 200 may determine whether or not an option of transmitting the fax document 910 to the cloud print server 940 is activated. When the option is activated, the remote fax application 10 may transmit the received fax document 910 to the cloud print server 940.

The cloud print server 940 used in the present example is configured to support cloud print service based on a telephone number. Thus, the remote fax application 10 may transmit the fax document 910 to the cloud print server 940 with the telephone number XXX-1234, as a transmission destination. Here, the telephone number, which is the transmission destination, may be pre-stored in the remote fax application 10, or may be directly input by a user in the main device 200, when the fax document 910 is received.

When the fax document 910 is uploaded to the cloud print server 940, the cloud print server 940 may be accessed by a mobile terminal 920 having the telephone number XXX-1234 to identify the fax document 910. Also, when a user requests printing of the fax document 910 from the mobile terminal 920, the fax document 910 may be printed via an image forming apparatus 930 pre-registered in the cloud print server 940.

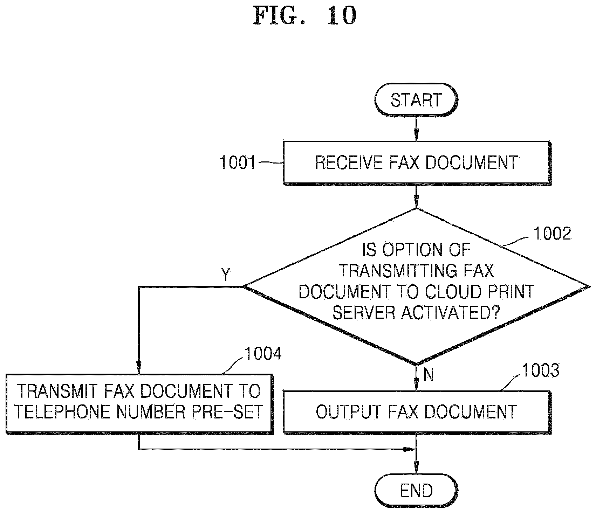

FIG. 10 is a flowchart of a method of routing fax to a cloud print server, according to an example.

Referring to FIG. 10, a main device may receive a fax document from a fax device via a PSTN in operation S1001. The main device may determine whether or not a transmission option to the cloud print server is activated in operation S1002. When the transmission option is not activated, the method may proceed to operation S1003 and the main device may output the received fax document. However, when the transmission option is activated, the method may proceed to operation S1004, and the main device may transmit the fax document to the cloud print server with a pre-set telephone number as a transmission destination.

FIG. 11 is a view illustrating a process of storing a fax document in a storage folder of the main device 200, according to an example.

Referring to FIG. 11, when the fax device A 400a transmits a fax document 1110 to the main device 200 via a PSTN, the remote fax application 10 installed in the main device 200 may identify that a caller number of the fax document 1110 is 123-XXXX. Next, the remote fax application 10 may determine whether or not a save to box event corresponding to the identified caller number is registered. Referring to FIG. 11, the save to box event may be registered such that when the caller number of a fax document is 123-XXXX, the fax document is to be stored in a box of the sub-device B 300b. Thus, the remote fax application 10 may encrypt and generate a storage folder 1120 corresponding to the sub-device B 300b in the memory 240 of the main device 200, and may store the received fax document 1110 in the generated storage folder 1120.

The sub-device B 300b may access the storage folder 1120 of the main device 200 and receive the fax document 1110. In detail, when the remote fax application 10 receives an access request from the sub-device B 300b, the remote fax application 10 may determine the storage folder 1120 corresponding to the sub-device B 300b, and determine whether a password received from the sub-device B 300b corresponds to a password of the storage folder 1120. When the password received from the sub-device B 300b corresponds to the password of the storage folder 1120, the remote fax application 10 may transmit the fax document 1110 stored in the storage folder 1120 to the sub-device B 300b.

FIG. 12 is a flowchart of a method of storing a fax document in a storage folder of a main device, according to an example.

Referring to FIG. 12, the main device may receive the fax document from a fax device via a PSTN in operation S1201. The main device may identify a caller number of the fax document and determine whether a storage event corresponding to the caller number is registered, in operation S1202. When the storage event corresponding to the caller number is not registered, the method may proceed to operation S1207 and the main device may output the received fax document. However, when the storage event corresponding to the caller number is registered, the method may proceed to operation S1203 and the main device may encrypt and generate a storage folder corresponding to a sub-device designated by the storage event and may store the received fax document in the generated storage folder.

When the main device receives, from a sub-device, a request of accessing the storage folder, along with a password, the main device may determine a storage folder corresponding to the sub-device. Next, the method may proceed to operation S1205, and the main device may determine whether the password received from the sub-device corresponds to a password of the storage folder. When the password received from the sub-device corresponds to the password of the storage folder, the method may proceed to operation S1206, and the main device may transmit the fax document stored in the storage folder to the sub-device.

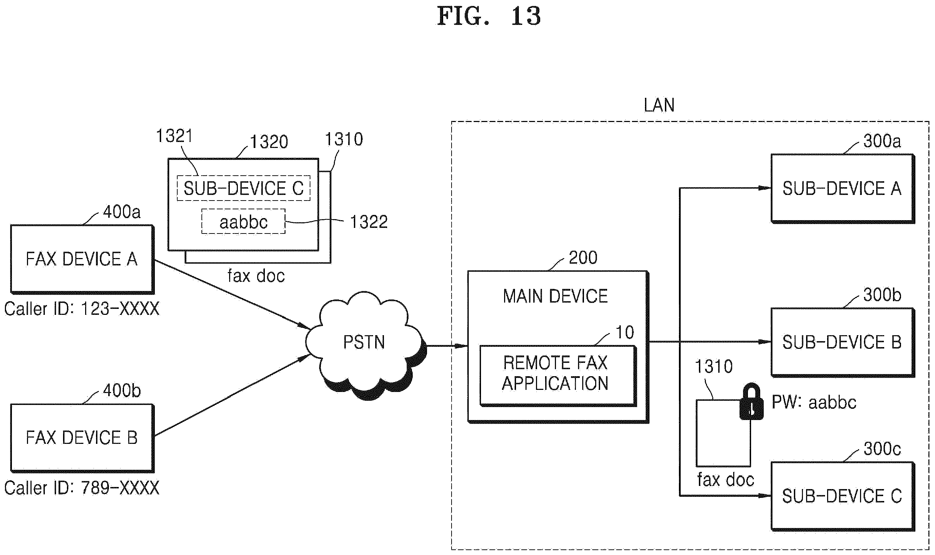

FIG. 13 is a view illustrating a process of routing fax based on a tag cover 1320 according to an example.

Referring to FIG. 13, the fax device A 400a may transmit a fax document 1310 together with the tag cover 1320 to the main device 200. The tag cover 1320 is an indicator including information required for routing, and may be generated by the fax device A 400a. For example, a transmission destination 1321 and a password 1322 used to encrypt the fax document 1310 may be written in the tag cover 1320.

FIG. 13 illustrates that in the tag cover 1320, the sub-device C 300c is written as the transmission destination 1321, and "aabbc" is written as the password 1322. When the remote fax application 10 installed in the main device 200 receives the fax document 1310 and the tag cover 1320, the remote fax application 10 may analyze the tag cover 1320 and identify that the transmission destination is the sub-device C 300c and the password is "aabbc." The remote fax application 10 may encrypt the fax document 1310 with "aabbc" as the password, and may transmit the encrypted fax document 1310 to the sub-device C 300c.

Meanwhile, the tag cover 1320 may be discarded after being used and may not be re-used.

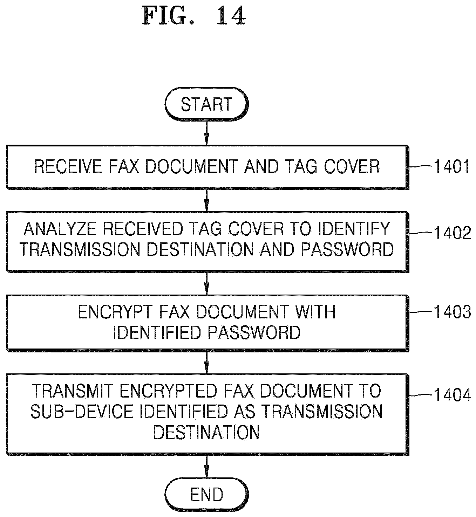

FIG. 14 is a flowchart of a method of routing fax based on a tag cover, according to an example.

Referring to FIG. 14, a main device may receive a fax document and a tag cover from a fax device via a PSTN, in operation S1401. The main device may analyze the received tag cover and identify a transmission destination and a password, in operation S1402. The main device may encrypt the fax document via the identified password in operation S1403 and the main device may transmit the encrypted fax document to a sub-device identified as the transmission destination in operation S1404.

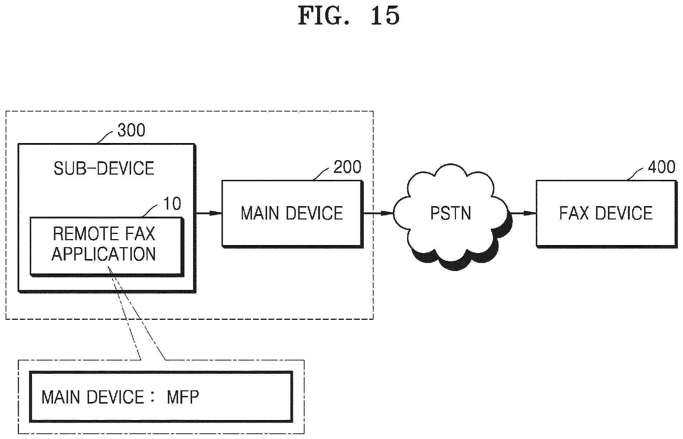

Hereinafter, examples in which fax is transmitted will be described with reference to FIGS. 15 through 18. According to necessity, FIG. 2 will be also referred to.

A sub-device does not support fax functions for itself, and thus, fax may be transmitted by using another device or a server supporting the fax functions. The sub-device may, for example, select an image forming apparatus or a fax server supporting the fax functions, as a main device, and may transmit fax. The fax server denotes a server configured to transmit and receive fax in response to a request of transmitting and receiving fax in a form of file transmission via a web or in a form of email transmission, when the request is received from a client through a network.

The remote fax application 10 installed in the sub-device 300 may provide a UI screen for selecting the main device, and may request the selected main device to transmit fax.

Also, the remote fax application 10 may display a UI screen for receiving a user input, such as an input of selecting a fax document, an input of inputting a fax number, etc., on an input and output unit 310 of the sub-device 300.

Also, the remote fax application 10 may display a UI screen for setting a scanning option applied to a scan job for transmitting fax, on the input and output unit 310.

Also, the remote fax application 10 may display a UI screen for bringing an address book stored in the memory 340 of the sub-device 300 or an address book stored in an external server (e.g., a lightweight directory access protocol (LDAP) server) to be used to transmit fax, on the input and output unit 310.

FIG. 15 is a view illustrating a process of transmitting fax by selecting an MFP as a main device, according to an example.

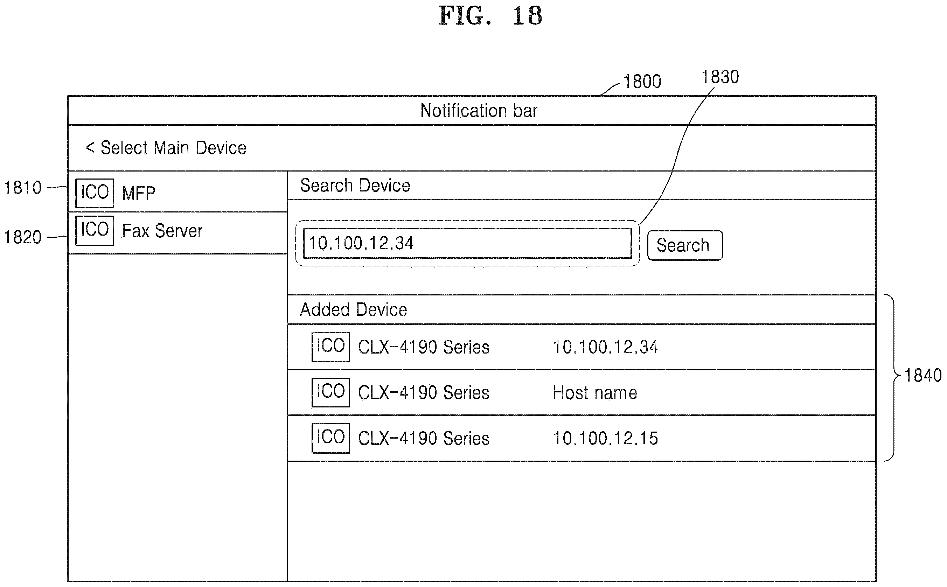

Referring to FIG. 15, the remote fax application 10 installed in the sub-device 300 may select the MFP as the main device 200. In detail, a user may pre-set a device to be used as the main device, via a UI screen for selecting the main device, the UI screen being displayed on the input and output unit 310 of the sub-device 300 by the remote fax application 10. A UI screen 1800 for selecting the main device is illustrated in FIG. 18.

Referring to FIG. 18, an MFP item 1810 and a fax server item 1820 are displayed on the UI screen 1800 as items to be selected as the main device. FIG. 18 illustrates that the MFP item 1810 is selected so that a search window 1830 for searching for an MFP is displayed. The user may search for the MFP by inputting an IP address or a host name of the MFP in the search window 1830. When the MFP is found and is selected as the main device, the selected MFP may be displayed on an additional device list 1840.

When the fax server item 1820 is selected as the main device, a UI screen for selecting or inputting items required for setting a fax server may be displayed.

Referring to FIG. 15 again, the remote fax application 10 may transmit a fax document and a fax number to the main device 200 and may request the main device 200 to transmit fax. The main device 200 that receives the request may transmit the fax document to the fax device 400 corresponding to the received fax number, via a PSTN.

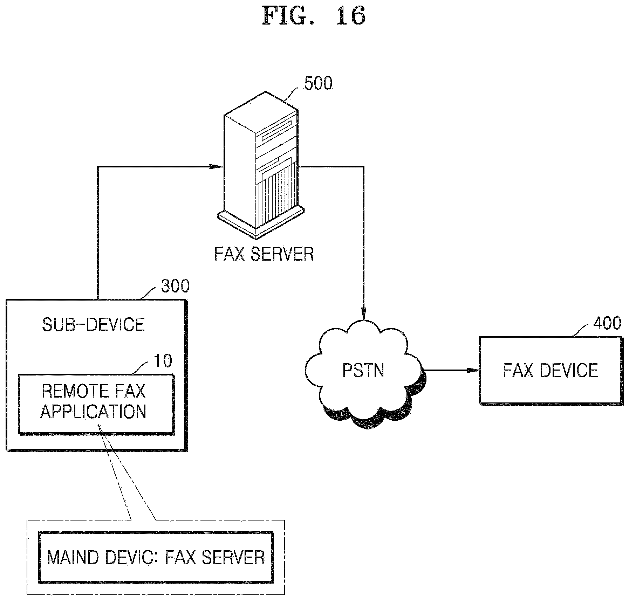

FIG. 16 is a view illustrating a process of transmitting fax by selecting a fax server 500 as a main device, according to an example.

Referring to FIG. 16, the remote fax application 10 installed in the sub-device 300 may select the fax server 500 as the main device. In detail, a user may pre-set the fax server item 1820 as the main device in the UI screen 1800 of FIG. 18, and thus, when the remote fax application 10 receives a request of transmitting fax, the remote fax application 10 may select the fax server 500 as the main device.

The remote fax application 10 may transmit a fax document and a fax number to the fax server 500 selected as the main device, and request the fax server 500 to transmit fax. The fax server 500 that receives the request may transmit the fax document to the fax device 400 corresponding to the received fax number via a PSTN.

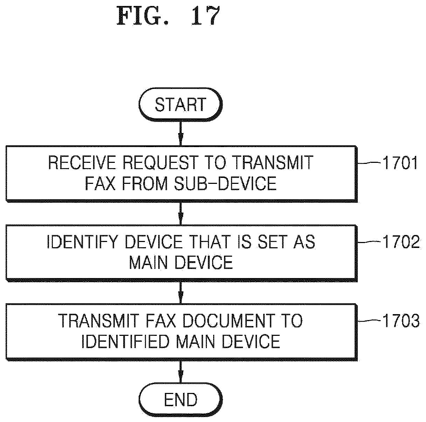

FIG. 17 is a flowchart of a method of transmitting fax by selecting a main device, according to an example.

Referring to FIG. 17, a sub-device may receive a request to transmit a fax from a user in operation S1701. In detail, the sub-device may receive a fax document selected by the user and a fax number input by the user via a UI screen provided by a remove fax application installed in the sub-device. The sub-device may identify a device that is set as the main device in operation S1702. In detail, the sub-device may identify the device that is set as the main device via the remote fax application installed in the sub-device, and may select the identified device as the main device. For example, an MFP or a fax server may be selected as the main device. The sub-device may transmit the fax document and the fax number to the selected main device and may request the main device to transmit fax in operation S1703.

Meanwhile, the examples described in detail may be implemented as a form of a computer-readable recording medium configured to store instructions and data executable by a computer. At least one of the instructions and the data may be stored as a form of a program code, and when executed by a processor, may generate a certain program module and perform a certain operation.

The computer-readable recording medium may denote, for example, a magnetic storage medium, such as a hard disk, etc., an optical reading medium, such as a compact disc (CD) and a digital video disc (DVD), or may denote a memory included in a server accessible via a network. For example, the computer-readable recording medium may be the memory 240 of the main device 200 or the memory 340 included in the sub-device 300 connected to the main device 200 via a network.

## Claims

1. An image forming apparatus comprising:
a communicator configured to perform communication with an external device;
a fax unit configured to receive a fax document through a public switched telephone network;
a memory in which an application for routing the received fax document is installed; and
a controller configured to execute the application installed in the memory,
wherein the controller is further configured to select, based on an attribute of the fax document, a device to which the fax document is to be transmitted, and to transmit the fax document to the selected device via the communicator.

2. The image forming apparatus of claim 1, wherein the controller is further configured to identify a caller number of the fax document, to identify a device designated by a forward event corresponding to the identified caller number, and to transmit the fax document to the identified device.

3. The image forming apparatus of claim 1, wherein the controller is further configured to identify a form type of the fax document, to identify a device designated by a forward event corresponding to the identified form type, and to transmit the fax document to the identified device.

4. The image forming apparatus of claim 1, wherein the controller is further configured to identify whether or not an option of transmitting the fax document to a cloud print server is activated, and when the option is activated, to transmit the fax document to the cloud print server.

5. The image forming apparatus of claim 1, wherein the controller is further configured to identify a caller number of the fax document, to generate a storage folder corresponding to a device designated by a storage event corresponding to the identified caller number, and to store the fax document in the storage folder.

6. The image forming apparatus of claim 5, wherein when the controller receives a request for access to the storage folder from the device designated by the storage event, the controller is further configured to transmit the fax document to the device designated by the storage folder.

7. The image forming apparatus of claim 1, wherein when the fax unit receives a tag cover connected to the fax document, the controller is further configured to analyze the tag cover to identify a transmission destination and a password, and after encrypting the fax document with the password, to transmit the encrypted fax document to the transmission destination.

8. A method of transmitting a fax using an application, the method comprising:
receiving a fax document via a public switched telephone network;
determining a destination of the fax document based on an attribute of the fax document; and
transmitting the fax document to the determined destination.

9. The method of claim 8, wherein the determining of the destination of the fax document comprises:
identifying a caller number of the fax document;
identifying a forward event corresponding to the identified caller number; and
determining a device designated by the forward event as the destination of the fax document.

10. The method of claim 8, wherein the determining of the destination of the fax document comprises:
identifying a form type of the fax document;
identifying a forward event corresponding to the identified form type; and
determining a device designated by the forward event as the destination of the fax document.

11. The method of claim 8, wherein the determining of the destination of the fax document comprises:
determining whether or not an option of transmitting the fax document to a cloud print server is activated; and
when the option is activated, determining the cloud print server as the destination of the fax document.

12. The method of claim 8, wherein the determining of the destination of the fax document comprises:
identifying a caller number of the fax document;
identifying a storage event corresponding to the identified caller number;
generating a storage folder corresponding to a device designated by the storage event; and
determining the storage folder as the destination of the fax document.

13. The method of claim 12, further comprising:
receiving a request for access to the storage folder from the device designated by the storage event; and
transmitting the fax document stored in the storage folder to the device designated by the storage event.

14. The method of claim 8, wherein, when the receiving of the fax document comprises receiving a tag cover connected to the fax document,
the determining of the destination of the fax document comprises determining the destination of the fax document as a transmission destination identified by analyzing the tag cover, and
the transmitting of the fax document to the determined destination comprises encrypting the fax document with a password identified by analyzing the tag cover, and transmitting the encrypted fax document to the destination of the fax document.

15. A computer-readable recording medium having recorded thereon a computer program for executing any one of the methods of claims 8 through 14.
